# EUROPEAN PATENT APPLICATION

(11) **EP 3 115 438 A1**
(43) Date of publication of application: **11.01.2017**
(21) Application number: 16001494.0
(22) Date of filing: 06.07.2016
(51) Int. Cl.: C09K 21/02, C08K 9/00, C01B 33/24

(54) **GRANULE THAT CONTAINS SODIUM SILICATE, MIXTURE THAT CONTAINS SUCH GRANULES, FIRE-RETARDANT POLYMER MASS AND METHOD FOR PRODUCING SUCH A POLYMER MASS**

(30) Priority: 09.07.2015 BE 201505434
(71) Applicant: ANGO, besloten vennootschap met beperkte aansprakelijkheid, 2070 Zwijndrecht (BE)
(72) Inventor: Fleury, Albert George, 9120 Haasdonk (BE)
(74) Representative: Donné, Eddy

(57) **Abstract**

Granule that comprises a core of sodium silicate and which comprises a coating that is insoluble in water.

## Description

The present invention relates to a granule that contains sodium silicate, a mixture that contains such granules, a fire-retardant polymer mass and method for producing such a polymer mass.

More specifically, the invention is intended for fire-retardant applications of latex.

Sodium silicate is often used in fire-retardant applications, for example in the form of granules together with a binder, for example a polymer, to form a mass that does not fully burn in the event of fire, but which is converted into a non-burning layer with sufficient sturdiness, that is poorly thermally conductive, and as a result slows down the propagation of a fire to another room.

Such a mass can be used as a filler, for example, in hollow spaces in windows or doors or to seal openings.

If the sodium silicate contains water of crystallisation, this is released upon heating, which yields additional cooling, and thereby slows down the progress of a fire.

However, it has turned out that with many possible binders, especially with water-containing binders, for example polyvinyl acetate emulsion or natural latex, sodium silicate can only be poorly processed: a solid, hardened fully-formed mass is not obtained, but rather a granular product without a stable shape that is unusable for this application, or a product that is not hardened all the way through.

As a result, in many fire-retardant applications sodium silicate cannot be used, or only poorly so, in combination with water-containing binders.

The purpose of the present invention is to provide a solution to the aforementioned and other disadvantages, by providing a granule that comprises a core of sodium silicate, and which comprises a coating, preferably a complete coating, that is insoluble in water.

The sodium silicate is preferably sodium metasilicate with water of crystallisation.

It has turned out that such granules, in contrast to uncoated sodium silicate granules, do not lead to the above-mentioned problems when mixed with polymer emulsions in water, for example the said polyvinyl acetate emulsion or latex, and especially natural latex.

Such a mixture hardens without problems into a fire-retardant mass with a stable shape, and can thus be produced in various forms, such as sheets, strips or blocks, or poured into cavities to then harden in the form of the cavities concerned.

Without committing himself to a theory, the inventor believes that this is because sodium silicate can dissolve in the water of the binder into a highly alkaline solution, that can easily interfere chemically with the emulsion stability of such binders or with the desired chemical reactions that are needed to cause hardening.

It has even turned out that thanks to the presence of the coated granules the hardening of such binders proceeds much better than without.

While without such coated granules a skin is formed with natural latex for example, which seriously impedes the further access of air and evaporation of water, and thus further hardening, it turns out that with the use of granules according to the invention, the hardening of thick layers, even with a thickness of up to a few centimetres or more, is completed within one to a few days.

Preferably the coating essentially consists of one or more polymers.

Preferably the coating essentially consists of a hardened lacquer or hardened adhesive.

More preferably this is a hardened adhesive based on an isocyanate compound.

Preferably the coating consists of a hardened adhesive of which 90% or more consists of diphenylmethane diisocyanate or polymers thereof and solvent for diphenylmethane diisocyanate.

These products are readily available at low prices.

Preferably the granule is smaller than 3 mm and more preferably smaller than 2 mm.

Preferably the granule is larger than 0.1 mm and more preferably larger than 0.3 mm.

Preferably, the sodium silicate essentially or entirely consists of sodium metasilicate with water of crystallisation. Na₂O.SiO₂.5H₂O and Na₂O.SiO₂.9H₂O are preferred products here that are readily available.

Preferably the coating forms between 3% and 15% of the granule by weight. This gives a good balance between the covering nature of the coating and the fire-resistance that is obtained from the sodium silicate in particular.

The invention further concerns a mixture that comprises a polymer or one or more polymerisable monomers and that comprises granules according to the invention.

This can be a liquid mixture that is yet to harden, or it can be a mixture in which the polymer has hardened so that a mass with a stable shape is obtained.

The polymer is preferably a polyvinyl acetate emulsion in water or synthetic or natural latex.

Preferably the weight fraction of sodium silicate granules is greater than 0.2 and more preferably greater than 0.5, to thereby obtain an optimum fire-retardant effect.

The invention further concerns the use of granules according to the invention or a mixture according to the invention for fire-retardant applications, more specifically for forming a non-combustible and non-meltable mass that is used for filling cavities or holes.

The invention also concerns a method for producing a hardened fire-retardant polymer composition, in which in a first step a mixture is made according to the invention and in which in a second step the mixture is given the opportunity to harden into a solid polymer mass.

Preferably the polymer emulsion is latex.

Thanks to the said granules, such a hardening can take place quickly, typically in a maximum of a few tens of hours.

A further advantage is that traditional vulcanisation chemicals are not needed, nor a high temperature either.

A temperature of 70°C or more would lead to the decomposition of the said granule resulting in a large generation of gas, such that at least a part of the fire-retardant capacity of the sodium silicate is lost, and whereby the structure of the polymer mass also changes, and in particular the mechanical properties deteriorate.

Preferably the second step takes place at a temperature of at least 15°C.

Alternatively the method can also be defined as a method for hardening a polymer emulsion in water, preferably natural latex, whereby granules according to the invention are added to the polymer emulsion.

Thanks to the granules, the hardening of the polymer emulsion into a hard but elastic polymer mass can be done in a few hours to a few tens of hours, without a raised temperature and/or specific chemicals being required for this, such as with traditional vulcanisation.

With the intention of better showing the characteristics of the invention, a preferred embodiment of granules and a mixture according to the invention are described hereinafter by way of an example without any limiting nature.

Granules according to the invention can be made by introducing a quantity of Na₂O.SiO₂.5H₂O granules in a fluidized bed coater and fluidising with air.

Such devices are well known in coating technology and are available in a large number of variants from a large number of suppliers.

Such Na₂O.SiO₂.5H₂O granules are also readily available, for example from Silmalco in Belgium.

Then an adhesive of the Swiftbond 4177 type, made by H.B. Fuller Adhesives in Germany, is sprayed into the fluidised bed by means of a nozzle, so that the granules are covered with a layer of the said adhesive.

The said adhesive consists of diphenylmethane diisocyanate, also known as MDI, with butanone, or methyl ethyl ketone, as a solvent.

If necessary, 5-30% supplementary butanone can be added to make the adhesive more liquid and to facilitate the processing thereof.

During spraying the solvent evaporates from the adhesive that has already been applied to the granules, so that the adhesion of the granules to one another is prevented and the adhesive polymerises.

As soon as approximately 10% of adhesive by weight has been sprayed on the granules, the spraying is stopped. For approximately 60 minutes the fluidised bed is maintained to post-dry the granules.

The granules thus obtained have a coating of non-watersoluble hardened polymerised adhesive.

Alternatively, other known coating techniques such as pan coating can be used.

A mixture of 2 kg of the coated granules and 1 kg of liquid natural latex is prepared by means of a powerful agitator, whereby air is drawn into the mixture by the agitator on a limited scale.

Then the mixture is poured into a rectangular form up to a height of approximately 4 cm.

After two days of exposure to air this mixture has hardened to a rubbery mass, which when exposed to flames does not burn but carbonises on the surface and thereby preserves its shape, while the material lying under the surface only heats up further very slowly and finally also carbonises.

The hardened mixture can be cut into sheets to be used as a fire-retardant sheet material.

Before hardening the mixture can also be poured into cavities, for example in a door, and then hardens in the shape of the cavity, and gives fire-resistant properties to the door or another object in which it is used.

The present invention is by no means limited to the embodiments described as an example, but granules and mixtures according to the invention can be realised in all kinds of variants without departing from the scope of the invention.

## Claims

1. Granule that comprises a core of sodium silicate and which comprises a coating that is insoluble in water.

2. Granule according to claim 1, **characterised in that** the coating consists of a hardened lacquer or hardened adhesive.

3. Granule according to any one of the previous claims, **characterised in that** the coating essentially consists of one or more polymers.

4. Granule according to any one of the previous claims, **characterised in that** the coating is free of components that can supply metal ions due to ionisation with water.

5. Granule according to any one of the previous claims, **characterised in that** the coating constitutes between 3% and 15% of the granule by weight.

6. Mixture containing a polymer emulsion in water and granules according to any one of the previous claims.

7. Mixture according to claim 6, **characterised in that** the polymer emulsion is a polyvinyl acetate emulsion or synthetic or natural latex.

8. Mixture according to claim 6, **characterised in that** the polymer emulsion is natural latex.

9. Mixture according to any one of the claims 6 to 8, **characterised in that** the weight fraction of the said granules is greater than 0.2 and preferably greater than 0.5.

10. Fire-retardant polymer composition, **characterised in that** it consists of a mixture according to any one of the claims 6 to 9, whereby the polymer emulsion is hardened to a solid polymer mass.

11. Method for producing a hardened fire-retardant polymer composition, in which in a first step a mixture is made according to any one of the claims 6 to 9, and in which in a second step the mixture is given the opportunity to harden into a solid polymer mass.

12. Method according to claim 11, whereby the second step takes place at a temperature below 80°C.

13. Method according to claim 11 or 12, whereby the second step takes 200 hours or less, and preferably 100 hours or less.

14. Method according to any one of the claims 11 to 13, whereby the polymer emulsion or the polymer mass is not exposed to a temperature of 100°C or more, preferably is not exposed to a temperature of 80°C of more, and more preferably is not exposed to a temperature of 60°C or more.

15. Method for letting a polymer emulsion harden in water, preferably natural latex, **characterised in that** granules according to any one of the claims 1 to 5 are added to the polymer emulsion.
